(19) Europäisches Patentamt
European Patent Office
Office européen des brevets

(11) **EP 1 561 275 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **03798023.2**

(22) Anmeldetag: **07.08.2003**

(51) Int Cl.:
***H02P 9/00*** *(2006.01)*

(86) Internationale Anmeldenummer:
**PCT/CH2003/000535**

(87) Internationale Veröffentlichungsnummer:
**WO 2004/030199 (08.04.2004 Gazette 2004/15)**

(54) **GENERATORSYSTEM MIT DIREKT NETZGEKOPPELTEM GENERATOR UND VERFAHREN ZUR BEHERRSCHUNG VON NETZSTÖRUNGEN**

GENERATOR SYSTEM HAVING A GENERATOR THAT IS DIRECTLY COUPLED TO THE MAINS, AND METHOD FOR CONTROLLING MAINS INTERRUPTIONS

SYSTEME DE GENERATEUR A GENERATEUR A COUPLAGE DIRECT AU RESEAU ET PROCEDE POUR MAITRISER DES PANNES DE SECTEUR

(84) Benannte Vertragsstaaten:
**AT BE BG CH CY CZ DE DK EE ES FI FR GB GR HU IE IT LI LU MC NL PT RO SE SI SK TR**

(30) Priorität: **24.09.2002 CH 125503**

(43) Veröffentlichungstag der Anmeldung:
**10.08.2005 Patentblatt 2005/32**

(73) Patentinhaber: **IDS Holding AG**
**6300 Zug (CH)**

(72) Erfinder:
• **Stoev, Alexander**
**8127 Forch (CH)**
• **Dittrich, Andreas**
**8048 Zürich (CH)**

(74) Vertreter: **Becker, Konrad**
**Diltec AG**
**Technoparkstrasse 1**
**8005 Zürich (CH)**

(56) Entgegenhaltungen:
**DE-A- 10 206 828     DE-A- 19 735 742**

• **DITTRICH A ET AL: "DESIGN AND CONTROL OF A WIND POWER STATION WITH DOUBLE FED INDUCTION GENERATOR" , EPE '97. 7TH. EUROPEAN CONFERENCE ON POWER ELECTRONICS AND APPLICATIONS. TRONDHEIM, SEPT. 8 - 10, 1997, EPE. EUROPEAN CONFERENCE ON POWER ELECTRONICS AND APPLICATIONS, BRUSSELS, EPE ASSOCIATION, B, VOL. VOL. 2 CONF. 7, PAGE(S) 2723-2728 XP000792363 ISBN: 90-75815-02-6 in der Anmeldung erwähnt**

EP 1 561 275 B1

## Beschreibung

Die Erfindung bezieht sich auf Generatorsysteme mit direkt netzgekoppelten Generatoren, bei denen eine Wicklung (Stator), abgesehen von Anlauf-, Schalt- und Schutzeinrichtungen, direkt mit dem speisenden Netz verbunden und wenigstens eine weitere (Rotorwicklung) von aussen zugänglich ist. Dies trifft beispielsweise für Systeme mit doppelt gespeisten Asynchronmaschinen (DASM) oder Kaskadenmaschinen zu. Derartige Anlagen werden häufig in regenerativen Energieanlagen, wie Wind- und Wasserkraftwerken, eingesetzt.

Der Stand der Technik wird an Hand der Fig. 1 - 4 erläutert. Es zeigen:

Fig. 1a    Konstantdrehzahl-Generatorsystem
Fig. 1b    Drehzahlvariables Generatorsystem mit DASM-Generator
Fig. 2     Ströme und Spannungen in DASM-Generatorsystem
Fig. 3     Regelstruktur für drehzahlvariables Generatorsystem mit DASM-Generator
Fig. 4     Ersatzschaltbild der DASM

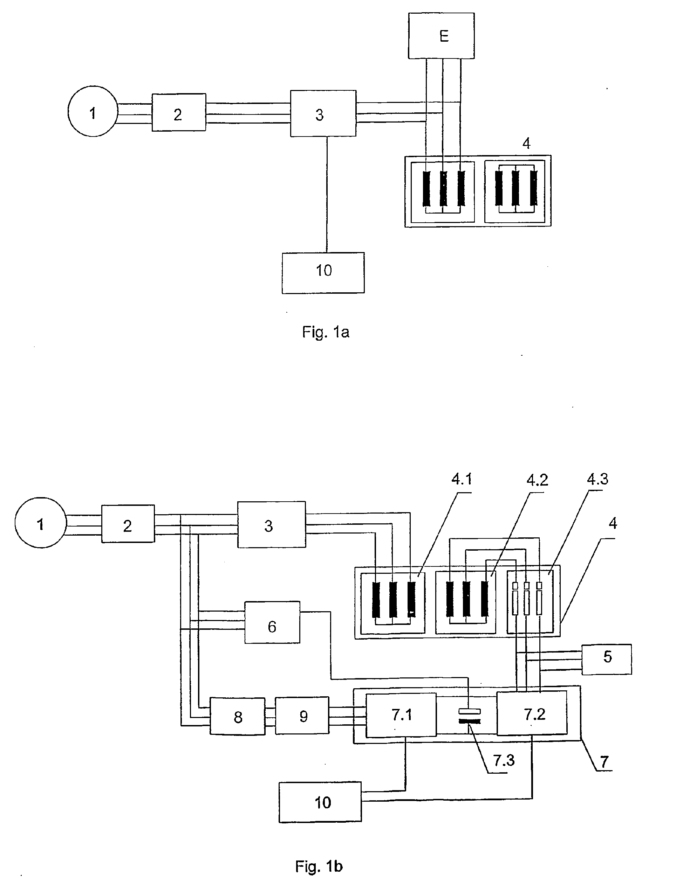

In einem bekannten umrichterlosen Generatorsystem (Fig. 1 a) ist der Generator 4 über einen Netzschutzschalter 2 mit dem Netz 3 bzw. Netztrafo verbunden, wobei sich zur Begrenzung der Anlaufströme im Kreis noch eine überbrückbare Anlaufvorrichtung 3 (Thyristorsteller) mit der zugehörigen Ansteuereinheit 10 befinden kann. Dem Generator kann eine Erregereinrichtung E parallel geschalten sein. Da der nutzbare Drehzahlbereich bei diesen Anlagen auf den zulässigen Schlupfbereich des Generators beschränkt ist, werden diese Systeme auch als Konstant-Drehzahlsysteme bezeichnet.

Ein ebenfalls bekanntes Generatorsystem mit DASM (Fig. 1b) besteht aus einem Schleifringläufergenerator 4 und einem Frequenzumrichter 7, wobei die Statorwicklung 4.1 des Generators über Schalteinrichtungen 2, 3 mit dem Drehstromnetz 1 verbunden ist und die Rotorwicklung 4.2 des Generators über Schleifringe 4.3, den Frequenzumrichter 7, eine Drossel 9 und einen Schalter 8 ebenfalls an das Drehstromnetz angeschlossen ist. Abhängig von der Drehzahl des Generators wird im übersynchronen Drehzahlbereich die Schlupfenergie aus dem Rotor 4.2 des Generators 4 mit dem Frequenzumrichter 7 ausgekoppelt und in das Netz über den Netzschalter 2 zurückgespeist, im untersynchronen Drehzahlbereich vom Netz bezogen und über den Frequenzumrichter 7 in den Rotor eingespeist. Der Hauptvorteil gegenüber einem umrichterlosen System besteht darin, dass ein wesentlich grösserer Drehzahlbereich des Generators zur Energiewandlung genutzt werden kann, man spricht deshalb von **drehzahlvariablen Systemen**. Solche Anlagen sind z.B. von V. Quaschning beschrieben worden (V. Quaschning: Regenerative Energiesysteme, Carl Hansen Verlag München Wien 1998, S. 217-226).

Drehzahlvariable Systeme lassen sich ebenfalls mit Kurzschlussläufer-Asynchrongenerator oder Synchrongenerator und Frequenzumrichter im Ständerkreis realisieren. Das DASM-System hat gegenüber einem solchen System den Vorteil, dass nur ein geringer Anteil der Gesamtenergie vom Frequenzumrichter 7 übertragen wird, denn der Anteil der durch den Frequenzumrichter umgewandelten Leistung ist proportional dem Schlupf S, d.h. beträgt nur einen Bruchteil der Gesamtleistung des Systems. Ein weiterer Vorteil ist der höhere Wirkungsgrad des Systems, da der überwiegende Anteil der Energie direkt vom Stator ins Netz gespeist wird. Die benötigte Wirkleistung des Frequenzumrichters für eine 90%-ige Regelung der Leistung einer Windanlage beträgt ca. 30 - 40 % der Gesamtleistung.

Doppelt gespeiste Asynchronmaschinen werden mit Schleifringen 4.3 und mit gewickelten Rotoren 4.2 und Statoren 4.1 gebaut. Der Frequenzumformer 7, bestehend aus einem motorseitigen Frequenzumformer (MFU) 7.2 und einem netzseitigen Frequenzumformer (NFU) 7.1, wird mit abschaltbaren Komponenten (IGBTs, GTOs etc.) aufgebaut, wobei der MFU und der NFU über den Zwischenkreiskondensator 7.3 miteinander gekoppelt sind. Die Vorladevorrichtung 6 sorgt dafür, dass der grosse Kondensator 7.3 langsam aufgeladen wird, vor dem Zuschalten des Frequenzumformers 7 an das Netz 1 über den Netzschalter 8. Damit werden unerwünscht grosse Netz-Zuschaltströme unterdrückt. Das Gesamtsystem Generator/Umrichter kann über einen Netzschutzschalter 2 vom Netz getrennt werden. Zusätzlich werden der Statorkreis über den Motorschalter 3 und der Frequenzumformer über den Netzschalter 8 an das Netz zu- und abgeschalten.

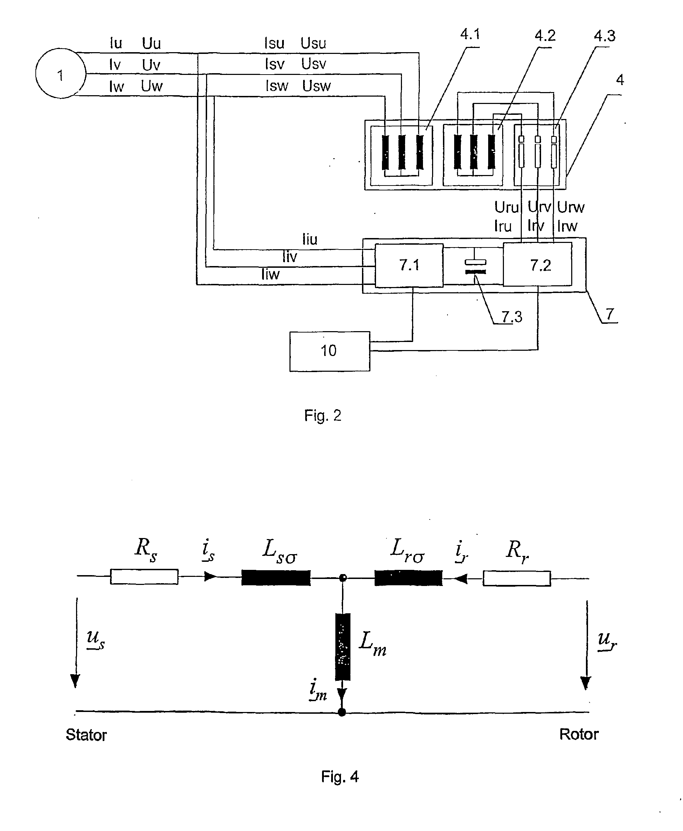

Fig. 2 zeigt die Ströme und Spannungen in einem DASM-Generatorsystem bekannter Art. Der MFU 7.2 speist die Rotorwicklungen 4.2 mit den Rotorspannungen Uru, Urv, Urw über die Schleifringe 4.3. Es fliessen dabei die Rotorströme Iru, Irv, Irw, welche eine Magnetisierungskomponente und eine schlupfproportionale Wirkkomponente aufweisen. Der NFU 7.1 tauscht die Schlupfenergie mit dem Netz 1 aus, indem der NFU 7.1 die Ströme Iiu, Iiv, Iiw ins Netz speist, wenn der Schlupf S < 0 ist (übersynchroner Drehzahlbereich). Im untersynchronen Drehzahlbereich (S > 0) fliesst die Energie vom Netz 1 in den NFU 7.1. Die Netzströme Iu, Iv, Iw ergeben sich aus der Summe der Statorströme Isu, Isv, Isw mit den Strömen Iiu, Iiv, Iiw.

Die doppelt gespeiste Asynchronmaschine wirkt im Stillstand wie ein AC-Transformator, angeschlossen am Netz 1 mit den Spannungen Uu, Uv, Uw, wobei die induzierten Rotorspannungen Uru, Urv, Urw um den Übersetzungsfaktor des Generators verstärkt werden. Die Generatorübersetzung wird grösser Eins gewählt, so dass die Rotorspannungen Uru, Urv, Urw beim Stillstand des Rotors höher als die Netzspannungen Uu, Uv, Uw sind. Da der MFU 7.2 für diese Spannungen nicht ausgelegt ist, wird der Generator erst dann ans Netz geschaltet, wenn der Schlupf S hinreichend klein wird. Der zugelassene Drehzahlbereich der DASM-Antriebe für Windanlagen beträgt ca. -0.3 < S < 0.3, d.h. der Arbeitsbereich der Drehzahl der DASM für Windanlagen liegt bei 0.7-facher bis 1.3-facher Nenndrehzahl. Das Ein- und Ausschalten des Motors vom Netz beim Verlassen des zugelassenen Drehzahlbereichs erfolgt über den Motorschütz 3, welcher nach dem Netzschutzschalter 2 angeordnet ist (siehe Fig. 1 b). Der Netzschutzschalter 2 sorgt für die sicherheitsrelevante Trennung des Antriebs vom Netz. Im Fehlertall - z.B. beim einphasigen Netzausfall - können auch im zugelassenen Drehzahlbereich Überspannungen am MFU 7.2 auftreten. Diese werden von einem Kurzschliesser 5 im Rotorkreis kurzgeschlossen, so dass der MFU 7.2 vor Zerstörung geschützt wird. Beim Aktivieren des Kurzschliessers 5 fliessen grosse Stator- und Rotorströme, der Netzschutzschalter 2 und der Motorschütz 3 öffnen, der Antrieb wird dadurch vom Netz 1 galvanisch abgetrennt.

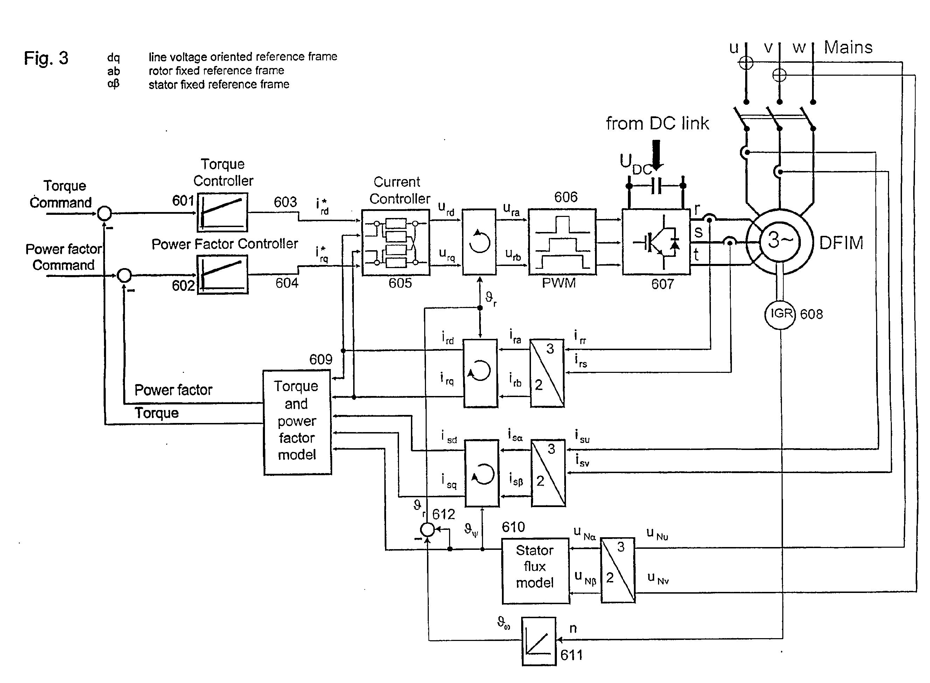

Fig. 3 zeigt eine bekannte Regelstruktur für ein drehzahlvariables Generatorsystem mit DASM-Generator. Aus signalverarbeitender Sicht hat das Generatorsystem die Aufgabe, eine definierte Wirk- und Blindleistung in das Netz einzuspeisen, wobei die Generierung der Wirkleistung über die Einprägung eines entsprechenden Drehmoments in den Generator erfolgt. Möglich ist dies in definierter Form nur bei Systemen, die mit Frequenzumrichter ausgerüstet sind (drehzahlvariable Systeme).

Üblicherweise wird die Regelung dazu auf der Seite des NFU auf den Phasenwinkel des Netzes orientiert, der über einen Phasenregelkreis (PLL) bereitgestellt wird. Auf diese Weise können Wirk- und Blindstrom auf der Netzseite entkoppelt eingeprägt werden.

Da der Statorfluss wegen der direkten Netzkopplung durch die Netzspannung vorgegeben ist, arbeiten die Regelverfahren auf der Generatorseite üblicherweise statorflussorientiert (feldorientiert). Alle dreiphasigen Grössen werden in diesem Fall auf ein rechtwinkliges komplexes Koordinatensystem bezogen, dessen reelle oder imaginäre Achse mit dem Raumzeiger der Statorflussverkettung zusammenfällt. Sie erhalten dadurch jeweils eine reelle und eine komplexe Komponente. Bezogen auf den Rotorstrom wirkt eine dieser Komponenten Ird momentbildend, die andere Irq flussbildend. Durch die Flussorientierung ist daher eine entkoppelte und damit genaue und hochdynamische Einprägung von Drehmoment- und Magnetisierungskomponente des Rotorstromes möglich.

Stand der Technik sind direkte Statorflussorientierung und Netzspannungsorientierung [1], [2], wobei letztere mit vereinfachten Algorithmen auskommt, da keine explizite Berechnung des Statorflusses erforderlich ist, eine exakte Entkopplung von moment- und flussbildender Komponente des Rotorstroms ist aber nur im stationären Betrieb vorhanden.

[1] W. Hofmann, A. Stoev, A. Dittrich, A. Thieme: Design and control of a wind power station with doubly-fed induction generator, EPE 1997 Conference Trondheim, S. 2.723 -2.728.

[2] A. Dittrich, N.P. Quang, A. Thieme: Doubly-fed induction machine as generator: Control algorithms with decoupling of torque and power factor, Electrical Engineering Vol. 80, No. 5, October 1997, S. 325 - 336.

Der zur Orientierung erforderliche Phasenwinkel des Statorflusses kann über Flussmodelle aus Statorspannung und -strom oder aus Stator- und Rotorstrom berechnet werden. Die Anordnung in Fig. 3 arbeitet mit Statorflussorientierung. Die Regler für Drehmoment 601 und Leistungsfaktor 602 berechnen die Sollwerte für den momentbildenden Strom 603 und den flussbildenden Strom 604. Diese werden in einem unterlagerten Stromregler 605 verarbeitet, der gleichzeitig beide Stromkomponenten gegeneinander entkoppelt und die entsprechenden Sollspannungen für den Pulsweitenmodulator 606 berechnet. Dieser wiederum berechnet das Ansteuermuster für die Schalter des MFU 607. Verfahren für Stromregelung und Modulation sind hinlänglich aus der Literatur bekannt.

Für die Feldorientierung ist es weiterhin erforderlich, die Rotorposition (Drehwinkel) zu bestimmen, was üblicherweise mit Hilfe eines elektromechanischen Drehgebers 608 erfolgt.

Alle Steuer- und Regelfunktionen sind in einer Regeleinheit realisiert, wie z.B. in Fig.1b als Regeleinheit 10 dargestellt.

In den Offenlegungsschriften WO 99/07996 (Zond Energy Systems: Variable Speed Wind Turbine Generator) und US 5,083,039 (Zond Energy Systems: Variable Speed Wind Turbine) wird die Gesamtanordnung eines Generatorsystems mit Mehrphasengenerator (Kurzschlussläufer-Generator) beschrieben, mit MFU, NFU, Zwischenkreis, Generator, Motorschütz und Netzschalter. Das Patent enthält ausserdem Verfahren zur Wirk- und Blindleistungs- und Drehmomenteinprägung im normalen Drehzahlbereich bei sinusförmigen Strömen und Spannungen, basierend auf feldorientierten Regelverfahren für Kurzschlussläufermotoren. Zusätzlich enthalten sind Verfahren zu Stromeinprägung und Modulation.

Weitere der Thematik verwandte Patentschriften sind:

EP 0884833 (Zond Energy Systems: Variable speed wind turbine (1998)): Das Patent beinhaltet das Regelsystem für einen statorgespeisten Mehrphasengenerator (Kurzschlussläufer) mit Sensoren, Feldorientierung, Momentregelung, Rotorflussberechnung, Stromeinprägung und Modulation.

WO 01/91279 (Vestas Energy Systems: Variable speed wind turbine having a matrix converter): Hier ist der im oben beschriebenen DASM-Generatorsystem eingesetzte Spannungs-Zwischenkreisumrichter durch einen Matrix-Konverter ersetzt, der den Vorteil eines kondensatorlosen Aufbaus hat. Ausserdem wird auf die Verwendung eines Drehgebers zur Detektion der Rotorposition verzichtet, indem der Rotorwinkel aus gemessenen Rotor- und Statorströmen berechnet und dazu ein ständiger Blindleistungsfluss zwischen Stator und NFU aufrechterhalten wird.

US 6,137,187 (Zond Energy Systems: Variable speed wind turbine generator (2000)): Beschrieben wird eine Anordnung mit DASM-Generator, feldorientierter Drehmomentregelung, Generierung von Blindleistung und Pitchregelung. Der Momentregler verfügt über ein Filter zur Dämpfung von Schwingungen des mechanischen Systems, die aus der gemessenen Drehzahl detektiert werden. Das Drehmoment wird über einen mit Hilfe des identifizierten Flussvektors berechneten Rotorstromvektor eingeprägt.

Regenerative Energieanlagen werden zunehmend in Gegenden mit schwachen Netzen, also Netzen mit Anschlussleistungen unter 200 kVA eingesetzt. Gleichzeitig steigen die Anforderungen an die Verfügbarkeit der Anlagen, d.h. Netzfehler wie Spannungseinbrüche bis etwa 90 % der Nennspannung innerhalb einer Millisekunde, ein- und mehrphasige Kurzschlüsse müssen zumindest kurzzeitig toleriert und im "Ride Through" beherrscht werden. Eine Fehlerabschaltung der Anlage im Verlauf eines solchen Fehlers ist nicht zulässig, es soll im Gegenteil möglichst kontinuierlich Strom ins Netz gespeist werden.

Bei Anlagen mit direkter Netzkopplung des Generators kommt es bei plötzlicher Änderung der Netzspannung zu erheblichen Überströmen im Stator- und Rotorkreis, die zum Ansprechen der Netzschutzeinrichtungen führen und in einem DASM-System die zulässigen Werte für den MFU übersteigen und ausserdem eine unzulässig hohe Spannung im Zwischenkreis zur Folge haben. Die Stromanstiege unmittelbar nach der Spannungsänderung werden nur durch die Spannungsdifferenz selbst und die im Kreis vorhandenen Streuinduktivitäten begrenzt, wodurch bereits nach wenigen Millisekunden Stromamplituden erreicht werden, die weit über den Überstromschwellen von MFU und netzseitigem Netzschutzschalter liegen. Da Generatoren der verwendeten Grössenordnung Hauptfeldzeitkonstanten im Sekundenbereich aufweisen, klingen die angeregten Ausgleichsvorgänge nur langsam ab, womit von einem "Ride Through" keine Rede sein kann. Um die Überströme und die zusätzlich in den Zwischenkreis gespeiste Energie aufzunehmen, müsste der Frequenzumrichter auf ein Mehrfaches der Nennleistung überdimensioniert werden, was wirtschaftlich unvertretbar ist. Ausserdem kann der Netzschutzschalter die Anlage nicht mehr wirkungsvoll schützen, da er ebenfalls die auftretenden Überströme tolerieren müsste.

Es ist prinzipiell denkbar und technisch möglich, in einem DASM-System den Kurzschliesser so zu erweitern, dass er die in den Rotorkreis gespeiste Energie aufnehmen und damit den MFU schützen kann. Er würde in diesem Fall als Chopper arbeiten und die Zusatzenergie abbauen. Ohne Netztrennung treten dann allerdings immer noch Überströme auf der Statorseite auf und es ist bis zum Abklingen der Ausgleichsvorgänge nicht möglich, definiert Energie vom Generator ins Netz zu speisen, da der MFU während des Chopperbetriebs deaktiviert werden müsste. Die Stator-Überströme werden bei betriebsmässiger Einstellung des Netzschutzschalters diesen auslösen und die Anlage vom Netz trennen, bevor der Stromfluss im Stator auf anderem Wege unterbrochen werden kann, z.B. mittels eines mechanischen Schalters (Schützes). Ein Pulssteller (Chopper) über dem Gleichstromzwischenkreis kann ebenfalls die in den Zwischenkreis gespeiste Energie aufnehmen, die auftretenden Überströme allerdings nicht beherrschen.

Dem Stand der Technik entsprechende Regelstrukturen sind nicht dafür ausgelegt und geeignet, schnelle Netzspannungs- und damit Statorflussänderungen zu kompensieren und das System hinreichend schnell zu stabilisieren. Es werden auch bei Spannungsänderungen, die noch keine Überströme hervorrufen, spürbare und nur langsam abklingende Transienten ausgelöst, was hinsichtlich der Beanspruchung der Bauelemente und der Netzbelastung unerwünscht ist.

Fig. 4 stellt das bekannte einphasige Ersatzschaltbild für eine doppelt gespeiste Asynchronmaschine dar. Der Stator mit der Eingangsspannung $u_s$ ist mit dem speisenden Netz, der Rotor mit der Eingangsspannung $u_r$ mit dem motorseitigen Frequenzumrichter verbunden. Über der Hauptinduktivität $L_m$ baut sich, angetrieben durch den Magnetisierungsstrom $i_m$, die Hauptflussverkettung der Maschine auf und induziert entsprechende Spannungen in Ständer- und Läuferwicklung. Der Statorstrom durchfliesst den Statorwiderstand $R_s$ und die statorseitige Streuinduktivität $L_{s\sigma}$, der Rotorstrom den Rotorwiderstand R, und die rotorseitige Streuinduktivität $L_{r\sigma}$. Im normalen Betriebszustand sind die statorseitig anliegende Netzspannung und die von der Hauptflussverkettung statorseitig induzierte Spannung gleich. Da die Netzspannung als starre treibende Grösse auf das System wirkt, wird auch davon gesprochen, dass der Hauptfluss der Maschine von der Netzspannung aufgeprägt wird.

Durch Fehler im Drehstromnetz (z.B. Kurzschlüsse) kann es zu plötzlichen Einbrüchen der Netzspannung kommen. Energieversorger gehen von plötzlichen Spannungsänderungen bis auf 15 % der Nennspannung aus. Der Hauptfluss der Maschine kann sich, da er an die relativ grosse Hauptinduktivität der Maschine gebunden ist, nicht plötzlich ändern, das gleiche gilt demzufolge für die induzierte Spannung. Es kommt daher nach schnellen Änderungen der Netzspannung zu einer Spannungsdifferenz zwischen Netzspannung und induzierter Spannung, die zu entsprechend hohen Aus-

gleichsstrômen führt. Diese Ausgleichsströme erreichen, abhängig von der Spannungsdifferenz und der Streuinduktivität des Generators, bereits nach wenigen (< 5) Millisekunden unzulässig hohe Werte. Der Hauptfluss wird sich letztlich nach einem längeren Übergangsvorgang an das neue Niveau der Netzspannung anpassen. Bei Anlagen, die dem Stand der Technik entsprechen, ist allerdings ein Abschalten der Anlage durch Ansprechen der Schutzeinrichtungen von bestimmten Spannungsänderungs-Pegeln an unvermeidlich, was sich nachteilig erweist. An diesen Problemkreisen setzt die Erfindung an.

Aufgabe der Erfindung ist es, mit wirtschaftlich vertretbarem Aufwand sicherzustellen, dass ein Generatorsystem nach Fig. 1b bei plötzlichen Netzspannungsänderungen bis um etwa 90 % der Nennspannung kontinuierlich bzw. mit nur unwesentlicher Unterbrechung Energie ins Netz speisen kann. Die auftretenden Transienten werden minimiert, und es wird ermöglicht, den Speisebetrieb unter definierten Bedingungen in kürzester Zeit nach der Spannungsänderung fortzusetzen, unabhängig von Richtung und Geschwindigkeit der Spannungsänderung.

Eine weitere Aufgabe besteht darin, ein Verfahren zum Betrieb eines entsprechend erweiterten Generatorsystems zu beschreiben.

Erfindungsgemäss werden diese Aufgaben mit einem Generatorsystem gemäss dem Wortlaut des Patentanspruches 1 und mit einem Verfahren gemäss dem Wortlaut des Patentanspruches 16 gelöst. Die Erfindung wird im Folgenden anhand der Figuren näher erläutert. Es zeigen:

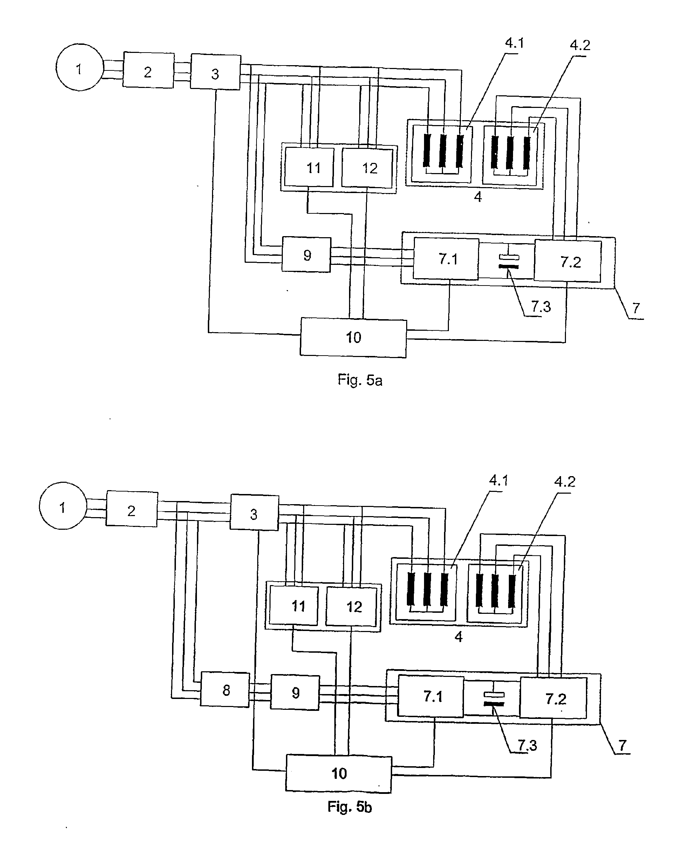

Fig. 5a    Drehzahlvariables Generatorsystem mit DASM-Generator und Schnellentregung
Fig. 5b    Drehzahlvariables Generatorsystem mit DASM-Generator, Schnellentregung und kontinuierlichem Stromfluss bei Netzfehlern

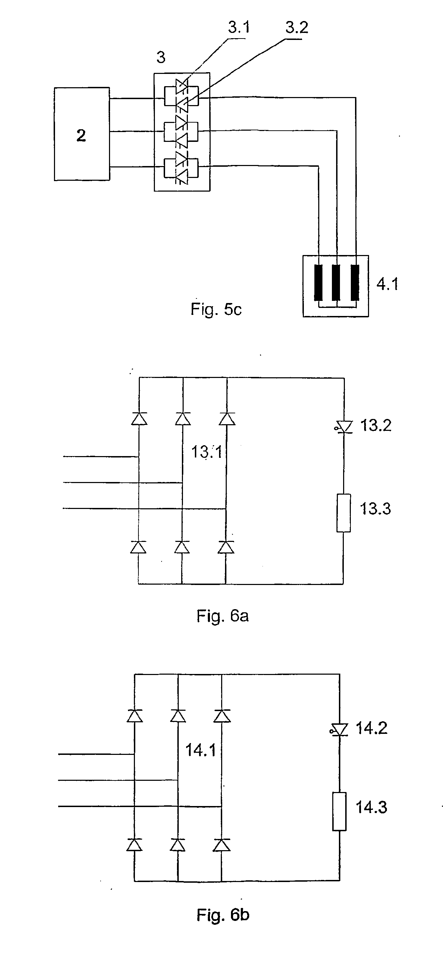

Fig. 5c    Ausführungsbeispiel eines elektronischen Schalters
Fig. 6a    Ausführungsbeispiel einer Einheit zur Schnellabschaltung
Fig. 6b    Ausführungsbeispiel einer Einheit zur Schnelldemagnetisierung

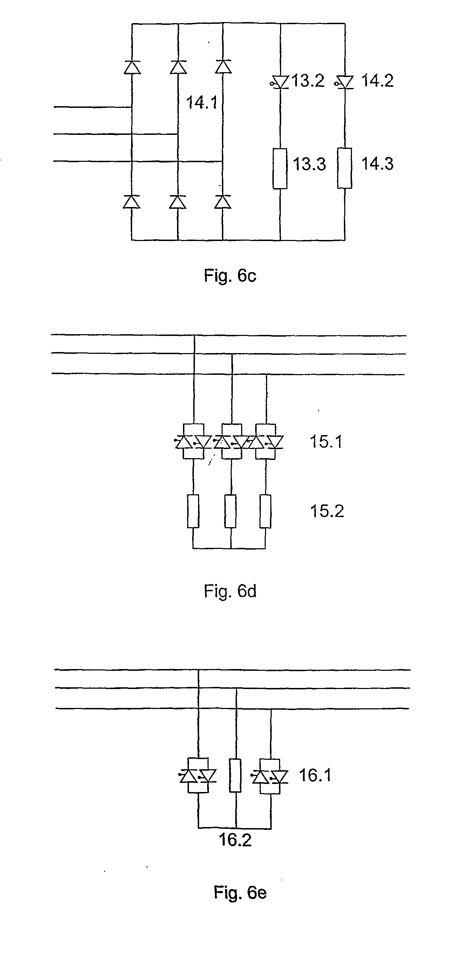

Fig. 6c    Ausführungsbeispiel der Einheiten zur Schnellabschaltung und zur Schnelldemagnetisierung in einer Einheit
Fig. 6d    Ausführungsbeispiel der Einheiten zur Schnellabschaltung bzw. Schnelldemagnetisierung in dreiphasiger Anordnung
Fig. 6e    Ausführungsbeispiel der Einheiten zur Schnellabschaltung bzw. Schnelldemagnetisierung in vereinfachter dreiphasiger Anordnung

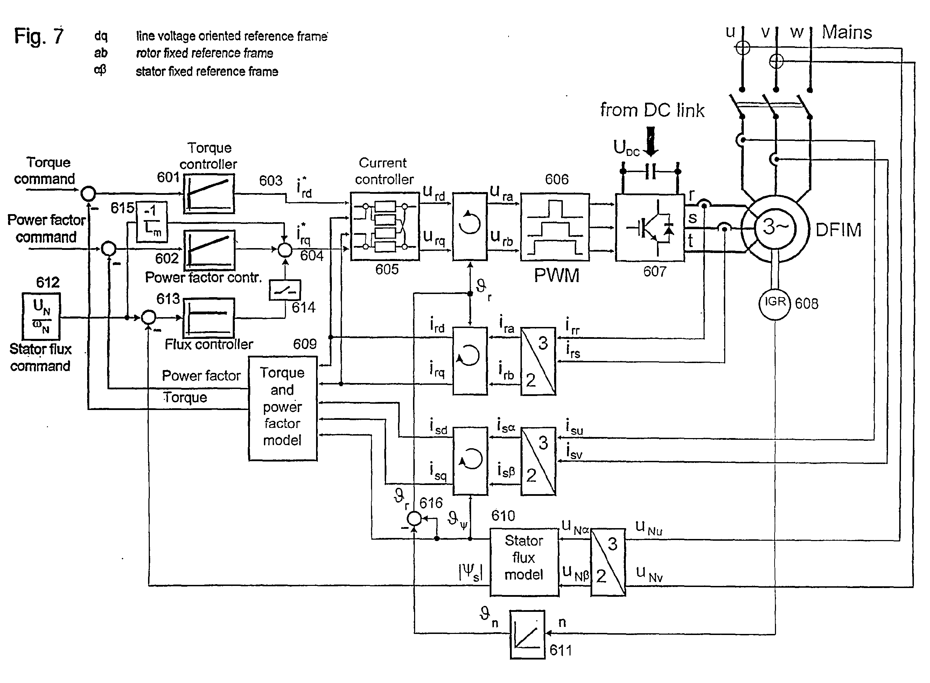

Fig.7    Ausführungsbeispiel einer Regelstruktur für ein drehzahlvariables Generatorsystem mit DASM-Generator und Statorflussregelung

Soll ein Generatorsystem während der Dauer des Netzspannungseinbruchs weiter betrieben werden, ist es erforderlich, den Hauptfluss des Generators schnellstmöglich an das aktuelle Niveau der Netzspannung anzupassen. Dies gelingt nur, wenn für diesen Eingriff der Generator zunächst von der treibenden Grösse, also der Netzspannung, getrennt wird. Der Stromfluss ins Netz muss unterbrochen werden, bevor entsprechende Schutzeinrichtungen auslösen und die Anlage abschalten. Herkömmliche in derartigen Systemen verwendete Schalteinrichtungen (Schütze, Leistungsschalter) sind um Grössenordnungen zu langsam um derartige Vorgänge zu beherrschen. Auch ein mit Thyristoren aufgebauter elektronischer Schalter hat eine Verzögerungszeit von maximal 10 ms (bei 50 Hz Netzfrequenz) und ist damit zu langsam. Eine hinreichend schnelle Stromunterbrechung (innerhalb einiger $10\,\mu s$) ist somit nur zu gewährleisten, wenn ein elektronischer Schalter verwendet und dieser mit einer Schnellabschalteinheit ausgerüstet wird. Auch Schalter mit abschaltbaren Halbleiterbauelementen (Gate Turn-Off Thyristor (GTO) oder Gate Controlled Thyristor (GCT)) sind einsetzbar, für diese Anwendung allerdings kostenmässig fragwürdig.

Erfindungsgemäss werden die Aufgaben durch folgende Einrichtungen und Verfahren gelöst und werden vorab summarisch wie folgt beschrieben (Fig. 5a):

• Anordnung eines elektronischen Schalters 3 zwischen den Primär- bzw. Statoranschlüssen des Generators 4 und Netzschutzschalter 2 zusammen mit einer Einheit zur Schnellabschaltung 11 dieses Schalters
• Anordnung einer Einheit zur Schnelldemagnetisierung 12 des Generators parallel zu den Stator- oder Rotoranschlüssen
• Abschaltung des elektronischen Schalters 3 nach Detektion einer Netzspannungsänderung entsprechender Amplitude
• Gleichzeitiges Zuschalten der Einheit zur Schnelldemagnetisierung 12
• Definierte Steuerung der Rotorspannung über den MFU zur Minimierung der Entregungs-/Erregungszeit und zur Schnellsynchronisation der induzierten Statorspannung auf Betrag und Phasenwinkel der Netzspannung
• Wiederzuschalten des elektronischen Schalters 3 und Fortsetzung des Speisebetriebs

Fig. 5a zeigt ein drehzahlvariables Generatorsystem mit DASM-Generator und Schnellentregung.
Ein DASM-Generator 4 mit einem Frequenzumformer 7 ist über einen Netzschutzschalter 2 an einem Netz 1 angeschlossen. Zwischen den Statorwicklungen 4.1 der DASM 4 und dem Netzschutzschalter 2 liegt ein elektronischer Schalter 3. Die Rotorwicklungen 4.2 der DASM 4 sind mit dem motorseitigen Frequenzumformer 7.2 verbunden. Der Frequenzumformer 7 ist als Spannungszwischenkreis-Umformer ausgeführt und besteht aus zwei AC/DC-Wandlern, einem netzseitigen Frequenzumformer (NFU) 7.1 und einem motorseitigen Frequenzumformer (MFU) 7.2, welche über einen Zwischenkreis-Kondensator 7.3 gekoppelt sind. Der netzseitige Frequenzumformer 7.1 ist über eine Netzdrossel 9 mit den Statoranschlüssen der Statorwicklungen 4.1 verbunden. Eine Regeleinheit 10 ist mit den beiden Frequenzumformern 7.1, 7.2 und mit dem elektronischen Schalter 3 verbunden und übernimmt sämtliche Regel- und Steueraufgaben. Vorteilhafterweise wird der Frequenzumformer 7 als bidirektionaler Spannungszwischenkreis-Umformer ausgelegt.

Erfindungsgemäss besteht die Hauptaufgabe des elektronischen Schalters 3 demnach in der Freigabe und Unterbrechung des Energieflusses zwischen den Statorwicklungen 4.1 des Generators 4 und Netz 1. Er kann dazu an beliebiger Stelle zwischen Netzschutzschalter 2 und Statorwicklung 4.1 angeordnet sein, also z.B. unmittelbar nach dem Netzschutzschalter 2 oder zwischen den Abgriffen des NFU 7.1 und den Klemmen der Statorwicklung 4.1 (Fig. 5b).

Der elektronische Schalter 3 ist aus steuerbaren Halbleiterschaltern aufgebaut. Dies können beispielsweise antiparallel geschaltete netzkommutierte Thyristoren sein, netzkommutierte Thyristoren mit dazu antiparallel geschalteten zwangskommutierten Thyristoren (GTO, GCT) oder er kann vollständig aus zwangskommutierten (abschaltbaren) Thyristoren aufgebaut sein.

Wie erläutert, muss der elektronische Schalter 3 eine Einheit zur Schnellabschaltung 11 enthalten und ist mit der Regeleinheit 10 verbunden, über die diese angesteuert wird. Für GTO/GCT ist diese in Form der Gateansteuerung gegeben. Wird der Schalter aus Kostengründen mit Thyristoren ausgeführt, muss eine externe Abschalteinheit 11 parallel zu den Statoranschlüssen angeordnet werden. Im Weiteren weist das Generatorsystem eine Einheit zur Schnelldemagnetisierung 12 auf, die ebenfalls parallel zu den Statoranschlüssen liegt und über die Regeleinheit 10 angesteuert wird.

Fig. 5b zeigt ein drehzahlvariables Generatorsystem mit DASM-Generator, Schnellentregung und kontinuierlichem Stromfluss bei Netzfehlern.

Die Anordnung entspricht im Wesentlichen derjenigen von Fig. 5a mit den gleichen Bezugszeichen. Zusätzlich ist ein Netzschalter 8 vorhanden, der die Netzdrossel 9 unter Umgehung des elektronischen Schalters 3 mit dem Netzschutzschalter 2 verbindet. In der Anordnung nach Fig. 5a ist der Stromfluss zum Netz während der Aktivierung der Schnelldemagnetisierungseinheit 12 unterbrochen, da auch der NFU-Strom über diese fliesst. Mit dem Netzschalter 8 lässt sich der NFU unabhängig vom elektronischen Schalter 3 ans Netz schalten. Dadurch kann der NFU 7.1 unabhängig vom Schaltzustand des elektronischen Schalters 3 betrieben und ein kontinuierlicher Stromfluss zwischen Netz und NFU auch während der Zeitdauer einer Netzstörung aufrechterhalten werden.

Fig. 5c zeigt ein Ausführungsbeispiel eines dreiphasigen elektronischen Schalters 3 mit antiparallel geschalteten netzkommutierten Thyristoren 3.1, 3.2. Der elektronische Schalter 3 ist zwischen dem Netzschutzschalter 2 und den Statorwicklungen 4.1 angeordnet. Die Ausführung mit Thyristoren stellt - gegenüber abschaltbaren Halbleiterschaltern wie GTO oder GCT - eine besonders vorteilhafte Auslegung eines solchen Schalters dar und wird daher auch den folgenden Ausführungsbeispielen für die erfindungsgemässen Zusatzbaugruppen zugrundegelegt.

Fig. 6a zeigt ein Ausführungsbeispiel einer Einheit zur Schnellabschaltung für einen elektronischen Schalter 3 in der Form von Fig. 5c.

Diese kann beispielsweise aus einer Gleichrichterbrücke 13.1 mit abschaltbarem Thyristor (GTO/GCT) 13.2 und strombegrenzendem Element (Widerstand) 13.3 bestehen. Da der Generator Wirkleistung ins Netz speist, ist im Normalbetrieb die Generatorspannung höher als die Netzspannung und ermöglicht damit einen Wirkstromfluss vom Generator 4 zum Netz 1. Im Störungsfall wird der GTO/GCT 13.2 der Abschalteinheit gezündet und die Klemmenspannung des Generators gelangt unter die aktuelle Netzspannung. Damit werden die jeweils in Spannungsrichtung stromführenden Schalter 3.1 oder 3.2 in Sperrichtung betrieben und der Stromfluss kommt zum Stillstand. Bleibt der Phasenwinkel zwischen Strom und Spannung im Normalbetrieb unter 30°, ist garantiert, dass zu jedem Zeitpunkt in wenigstens zwei Phasen Strom- und Spannungsrichtung übereinstimmen und die betreffenden Zweige des elektronischen Schalters gelöscht werden, womit auch der Stromfluss durch den dritten Zweig endet. Vor dem Zünden der Schnellabschalteinheit werden die Ansteuersignale des elektronischen Schalters gesperrt. Der Widerstand 13.3 begrenzt den Kurzschlussstrom auf zulässige Werte. Nach Abschaltung des elektronischen Schalters wird der Kurzschluss durch Abschalten des GTO 13.2 wieder aufgehoben.

Auftretende Überspannungen durch die Unterbrechung des Stromes in den im Kreis vorhandenen Streuinduktivitäten sind durch geeignete schaltungstechnische Massnahmen zu beherrschen (Snubberbeschaltung).

Nach der Trennung vom Netz muss, wie beschrieben, die Magnetisierungsenergie des Generators abgebaut und der Hauptfluss schnellstmöglich an das neue Spannungsniveau angepasst werden. Das kann passiv oder aktiv erfolgen. Die Hauptfeldzeitkostante der Maschine, deren Grössenordnung im Sekundenbereich liegt, wird (vgl. Fig. 4) im Normalbetrieb im Wesentlichen durch die Hauptinduktivität $L_m$ und die stator- bzw. rotorseitigen Widerstände $R_s$ bzw. $R_r$ definiert. Ein denkbarer Weg zur Beschleunigung des Flussabbaus ist demzufolge die Verkleinerung dieser Zeitkonstante durch entsprechende externe schaltungstechnische Massnahmen (passive Demagnetisierung). Dazu ist zunächst der Generator elektrisch von seiner Speisung zu trennen. Statorseitig ist dies durch die Abschaltung des elektronischen Schalters bereits erfolgt. Sekundär- bzw. rotorseitig ist der Generator elektrisch vom MFU getrennt, sobald die Schalter (IGBT) des MFU gesperrt werden und die gleichgerichtete Rotorspannung unter dem Niveau der Zwischenkreisspannung liegt, womit auch die Freilaufdioden des MFU sperren. Jetzt kann durch Zuschaltung externer Widerstände auf Stator- und/oder Rotorseite die Hauptfeldzeitkonstante faktisch beliebig manipuliert werden. Die schaltungstechnische Umsetzung erfolgt erfindungsgemäss mit der Einheit zur Schnelldemagnetisierung bzw. zur Schnellentregung.

Fig. 6b zeigt ein Ausführungsbeispiel einer Einheit zur Schnelldemagnetisierung. Die Einheit zur Schnellentregung/Schnelldemagnetisierung 12 ist vorzugsweise ähnlich der Schnellabschalteinheit aus einer Gleichrichterbrücke 14.1 mit abschaltbarem Thyristor 14.2 aufgebaut, wobei nach Zuschalten des Thyristors 14.2 der Widerstand 14.3 zusammen mit Haupt- und Streuinduktivität der Maschine deren Hauptfeldzeitkonstante definiert und gleichzeitig den Strom in Stator- und Rotorkreis begrenzt.

Der Strom durch die Schnelldemagnetisierungseinheit tritt bei Anordnung auf der Statorseite entsprechend des Generator-Übersetzungsverhältnisses transformatorisch übertragen auf der Rotorseite auf. Der Widerstand wird daher so ausgelegt, dass der zulässige maximale MFU-Strom nicht überschritten werden kann.

Fig. 6c zeigt ein Ausführungsbeispiel der Einheiten zur Schnellabschaltung und zur Schnelldemagnetisierung in einer Einheit.

Beide Einheiten - Schnellabschalt- und Schnelldemagnetisierungseinheit - werden vorzugsweise in einer Baugruppe mit gemeinsamer Diodenbrücke aufgebaut.

Zur weiteren Erläuterung soll folgendes detailliertes Ausführungsbeispiel für ein Generatorsystem nach Fig. 5a mit einer Nennleistung von 2.5 MW (Statornennstrom 2200 A, Statornennspannung 660 V) angeführt werden:

Schnellabschalt- und Demagnetisierungseinheit werden nach Fig. 6c ausgeführt. Dabei werden für die Gleichrichterbrücke 14.1 Dioden mit einem Nennstrom von 1500 A und einer Nennspannung von 2400 V eingesetzt. Der Schalter der Schnellabschalteinheit 13.2 besteht aus zwei parallel geschalteten GCT mit einem Nennstrom von je 4000 A. Der zugehörige Widerstand 13.3 hat einen Wert von 40 mΩ. Der Schalter der Schnelldemagnetisierungseinheit 14.2 besteht aus einem GCT mit einem Nennstrom von 3000 A. Der zugehörige Widerstand 14.3 hat einen Wert von 350 mΩ, womit sich im konkreten Fall eine Hauptfeldzeitkonstante von 10 ms ergibt.

Fig. 6d und Fig. 6e zeigen weitere Ausführungsbeispiele für Schnellabschalt- bzw. Schnelldemagnetisierungseinheiten; hier werden dreiphasige bidirektionale Schalter 15.1 mit Widerständen 15.2 bzw. eine abgerüstete Kombination von beiden 16.1, 16.2 eingesetzt.

Eine aktive Demagnetisierung kann unmittelbar über den MFU vorgenommen werden. Dazu muss dieser während der Entmagnetisierungsphase eine dem Hauptfluss entgegengerichtete Spannung in die Rotorwicklungen einspeisen. Da der Generator statorseitig vom Netz getrennt ist, wird in diesem Fall der Flussabbau ausschliesslich über den Rotorkreis und die aufgeprägte Spannung gesteuert ($\Delta\psi = U \cdot \Delta t$). Die Eigenzeitkonstanten des Generators sind praktisch bedeutungslos. Mit dieser Methode sind, bei Einprägung der maximal verfügbaren dem Fluss entgegengesetzten Spannung, Entmagnetisierungszeiten auf 10 % des Nennwerts in der Grössenordnung von 10 ms erreichbar. Die aktive Demagnetisierung kann ohne oder in Kombination mit der passiven Demagnetisierung erfolgen. Bei einer Kombination muss die Demagnetisierungseinheit allerdings auf der Statorseite angeordnet werden, da der MFU in diesem Fall nicht abgeschaltet werden kann.

Eine plötzliche Netzspannungsänderung kann auf direktem Weg über die Erfassung der Netzspannung selbst oder indirekt über die Detektion von Überströmen im Statorkreis oder, im Fall des DASM-Systems, in NFU oder MFU bzw. durch Detektion einer Überspannung im Zwischenkreis 7.3 erfasst werden. Da Überströme und Überspannungen auch andere Ursachen haben können, stellt die Sequenz zur Beherrschung von Netzfehlern auch einen Schutz des Systems bei anderen Störungen dar. Eine Abschaltung über indirekte Erfassung hat den Vorteil, dass die Netztrennung tatsächlich nur erfolgt, wenn die Störung nicht durch Gegenmassnahmen der Regeleinheit 10 kompensiert werden kann. Die Erkennung der genannten Fehler löst unmittelbar die Abschaltung des elektronischen Schalters 3 über die Schnellabschalteinheit 11 aus. Eine gleichzeitige Abschaltung von NFU oder MFU (Impulssperre) oder ein Zünden des Kurzschliessers 5 sind erst erforderlich, wenn die Überströme durch Abschalten des elektronischen Schalters 3 nicht begrenzt werden können (d.h. systeminterne Ursachen haben). Dadurch wird durch die erfindungsgemässen Anordnungen die Verfügbarkeit des Systems und dessen Fähigkeit, externen Fehlern aktiv entgegen zuwirken, wesentlich erhöht.

Im folgenden folgt eine detaillierte Beschreibung des erfindungsgemässen Verfahrens zum Betrieb des Generatorsystems bei Netzstörungen.

Nach Angaben der Energieversorger (E.ON Netz GmbH: Ergänzende Netzanschlussregeln für Windenergieanlagen, Stand 01.12.2001) ist mit plötzlichen Spannungsänderungen vor allem bei einem Spannungseinbruch zu rechnen, während das Wiederhochfahren der Netzspannung im Sekundenbereich erfolgt. Einbrüche stellen somit den kritischeren und vorrangig zu beherrschenden Fall dar.

Aus diesem Grund wird in der vorliegenden Erfindung vorrangig mit den Begriffen Schnellentregungseinheit bzw. Schnelldemagnetisierungseinheit für die entsprechende Zusatzbaugruppe 12 gearbeitet, obwohl diese, wie aus der folgenden Beschreibung ersichtlich, auch für den umgekehrten Fall, die Aufmagnetisierung nach entsprechend schneller Spannungswiederkehr, zum Einsatz kommt.

Nach einem Einbruch der Netzspannung wird zunächst der Generator statorseitig durch den elektronischen Schalter vom Netz getrennt. Die Trennung muss innerhalb einer Zeit erfolgen, während der die auftretenden Überströme noch nicht die Auslöseschwelle von Schutzeinrichtungen erreicht haben. Deshalb ist es erforderlich, den Stromfluss zum Netz nach spätestens 100 $\mu$s, besser in weniger als 50 $\mu$s, zu unterbrechen. Die Unterbrechung erfolgt mit Hilfe der Schnellabschalteinheit 11. Diese ist solange aktiv bis der elektronische Schalter 3 abgeschalten hat. Danach oder gleichzeitig mit der Schnellabschalteinheit wird die Schnelldemagnetisierungseinheit 12 zugeschalten und bestimmt nach Abschalten der Schnellabschalteinrichtung die elektrischen Verhältnisse im Statorkreis und den in den Stator- und Rotorwicklungen fliessenden Strom. Solange diese zugeschalten ist, muss der Statorfluss des Generators auf das durch den aktuellen Wert der Netzspannung vorgegebene Niveau abgebaut werden, d.h. die induzierte Statorspannung muss näherungsweise betrags- und phasengleich zur Netzspannung sein, damit beim Wiederzuschalten des elektronischen Schalters 3 keine oder nur vertretbar geringe Ausgleichsströme fliessen. Eine genäherte Phasengleichheit kann definiert nur mit aktiver Demagnetisierung mit Hilfe des MFU erreicht werden. Die Realisierung erfolgt mit Hilfe der Regeleinrichtung 10, indem ein flusserzeugender Strom derart in die Rotorwicklungen eingeprägt wird, dass die geforderte Amplituden- und Phasengleichheit zwischen induzierter Statorspannung und aktueller Netzspannung hergestellt ist.

Die Regeleinheit 10 enthält vorzugsweise einen Flussbetrags- und einen Phasenregler, die den reellen und imaginären Anteil des Rotorstromes in einer Weise in die Rotorwicklung einprägen, dass die vom Hauptfluss induzierte Statorspannung wiederum betrags- und phasengleich zur Netzspannung ist und dass Aufmagnetisierung und Synchronisation in möglichst kurzer Zeit abgeschlossen sind.

Nach Abschluss der Auf- bzw. Abmagnetisierung werden die Schnelldemagnetisierungseinheit ab- und der elektronische Schalter 3 wieder zugeschalten. Verbleibende Stromtransienten durch praktisch unvermeidbare Amplituden- und Phasenfehler zwischen Netzspannung und induzierter Statorspannung im Zuschaltmoment werden von der Regeleinheit 10 über MFU und NFU ausgeregelt. Der normale geregelte Betrieb des Generatorsystems kann fortgesetzt werden.

Um die verbleibenden Transienten mit hinreichender Geschwindigkeit (Ausregelung in weniger als 10 % der Hauptfeldzeitkonstante im Kleinsignalbetrieb) zu beherrschen und in kürzestmöglicher Zeit zu einer geordneten Netzeinspeisung zurückzukommen, reicht die übliche quasistationäre Regelstruktur (Fig. 3) nicht aus. Sie wird daher erfindungsgemäss durch eine Statorflussregelung ergänzt, wie nachfolgend erläutert.

Fig. 7 zeigt ein Ausführungsbeispiel einer Regelstruktur für ein drehzahlvariables Generatorsystem mit DASM-Generator und Statorflussregelung.

Erfindungsgemäss wird die in Fig. 3 beschriebene Regelstruktur durch einen Regler für den Statorfluss 613 ergänzt. Dieser erhält als Sollwert den sich aus dem stationären Wert der Netzspannung und der Netzfrequenz ergebenden Wert der Statorflussverkettung 612: $\psi_{s,ref}$ = U(netz) / (2$\cdot\pi\cdot$f(netz)). Sowohl Statorflussregler als auch Leistungsfaktorregler 602 arbeiten in der gezeigten Realisierung auf die flussbildende Komponente des Rotorstroms $i_{rq}$* 604 als Stellgrösse. Eine dynamische . Entkopplung zwischen beiden Algorithmen wird vorzugsweise durch entsprechende Einstellung der Dynamik des Leistungsfaktorreglers erreicht. Zusätzlich kann der Sollwert des Statorflusses, umgerechnet auf den rotorseitigen Magnetisierungsstrom 615, als Bypass auf den flussbildenden Rotorstromsollwert aufgeschalten werden, womit der Flussregler nur die dynamische Kompensation von Flussänderungen übernimmt. Dieser Kompensationsanteil kann weiterhin, abhängig von entsprechend wirkungsvollen Kriterien, wie der bewerteten Fluss-Regelabweichung, im stationären Betrieb abgeschalten werden 614.

Der Flussregler selbst kann nach verschiedenen aus der einschlägigen Theorie bekannten Ansätzen entworfen werden, wie PI-, PID- oder Zustandsraumentwurf. Er kann ebenfalls in ein von der Statorflussorientierung abweichendes (z.B. netzspannungsorientiertes) Regelsystem implementiert werden, wobei er in diesem Fall vektoriell für reelle und imaginäre Komponente des Flusses zu entwerfen ist und einen Stellgrössenanteil sowohl für die reelle als auch die imaginäre Komponente des Rotorstroms erzeugt.

Im folgenden wird ein Ausführungsbeispiel des Flussreglers angegeben für die Gesamtregelstruktur entsprechend Fig. 7. In diesem statorflussorientierten System kann der Flussregler als skalarer Regler entworfen werden. Für einen Regler mit PI-Verhalten ergibt sich der Ansatz zur Berechnung des aktuellen Wertes der im dynamischen Teil des Reglers 613 berechneten Stellgrösse $i_{rq}$* 604 wie folgt:

$$i_{rq}^*(k) = A^*[V_R^*(\psi_s^*(k) - \psi_s(k)) - B^*(\psi_s^*(k\text{-}1) - \psi_s(k\text{-}1)) + i_{rq}^*(k\text{-}1) - C^*u_{nq}(k)]$$

Dabei bezeichnen:

k aktueller Zeitschritt
$i_{rq}$* Sollwert der flussbildenden Rotorstromkomponente 604
$\psi_s$* Sollwert der Statorflussverkettung (von 612)
$\psi_s$ Istwert der Statorflussverkettung (von 610)
$u_{nq}$ Netzspannungskomponente in q-Achse (imaginärer Achse)

$$A \quad = T_s/T$$

$V_R$ Reglerverstärkung

$$B \quad = 1 - (1/A)$$

$$C \quad = T/L_m \text{ (vgl. Fig. 4)}$$

$T_s = (L_m+L_{s\sigma})/R_s$ Hauptfeldzeitkonstante (vgl. Fig. 4)
T Abtastzeit der Flussregelung

Die Reglerverstärkung $V_R$ bestimmt das Einschwingverhalten der Regelgrösse und wird entsprechend aus der Literatur bekannter Einstellregeln (z.B. Betragsoptimum) festgelegt. Eine derartige Auslegung ergibt ein gedämpftes Einschwingverhalten, wobei vorhandene Transienten aus Betrags- und Phasenfehlern der Statorspannung im Zuschaltmoment innerhalb eines Zeitraums von weniger als 10 % der Hauptfeldzeitkonstante ausgeregelt sind, falls keine Begrenzung von Zustandsgrössen des Generators (Rotor- oder Statorströme) während des Regelvorgangs auftritt. Dieser Regleransatz verwendet zur Berechnung der aktuellen Stellgrösse Soll- und Istwert der Regelgrösse (Statorflussver-kettung $\psi_s$), Vergangenheitswert der Stellgrösse und eine Komponente der Statorspannung (Netzspannung). Andere Ansätze, speziell wenn der Regler in einem nicht auf den Statorfluss bezogenen System vektoriell zu entwerfen ist, können weitere Zustandsgrössen, z.B. zur Entkopplung der reellen und imaginären Komponenten des Reglers, zur Berechnung der aktuellen Stellgrösse einbeziehen. Solche Zustandsgrössen können beispielsweise Rotorströme, Statorströme, Rotorspannungen oder Statorspannungen sein.

Erfindungsgemäss ist die Flussregelung vorzugsweise auf die Statorflussverkettung als Regelgrösse bezogen. Da sich Stator-, Rotor- und Hauptfluss der Maschine nur durch ihre Streuanteile unterscheiden, ist es allerdings denkbar und im Sinne der Erfindung gleichwertig, das beschriebene Regelverfahren mit geringfügigen Anpassungen auch auf Rotor- oder Hauptfluss zu übertragen und diese als Regelgrössen zu verwenden. Der Bezug auf die Statorflussverkettung stellt insofern keine Einschränkung dar.

Die vorangegangenen Erläuterungen beziehen sich grösstenteils auf bestimmte Anwendungsbeispiele und Realisierungsvarianten der Erfindung, was keine Einschränkung im Sinne des Inhalts der Erfindung darstellt. Es wird für eine entsprechend befähigte Person nachvollziehbar sein, dass die vorgeschlagenen Lösungen auf weitere gerätetechnische Anordnungen übertragbar sind. Speziell ist die Anwendung nicht auf doppelt gespeiste Asynchronmaschinen oder Schleifringläufermaschinen beschränkt, sondern erstreckt sich auf alle mehrphasigen Maschinen, die mit einer Wicklung direkt ans Netz gekoppelt sind und wenigstens eine weitere nach aussen zugängliche Wicklung aufweisen, wie z.B. Kaskadenmaschinen, bürstenlose doppelt gespeiste Maschinen oder doppelt gespeiste Reluktanzmaschinen.

Weiterhin sind die im Text verwendeten Begriffe Primärwicklung, Sekundärwicklung, Statorwicklung, Rotorwicklung usw. austauschbar und können entsprechend der eingesetzten Maschine mit anderen sinnentsprechenden Bezeichnungen belegt werden.

**Patentansprüche**

1. Generatorsystem mit doppelt gespeistem Dreiphasengenerator, umfassend einen doppelt gespeisten Dreiphasengenerator (4) mit netzgekoppelter Primärwicklung (4.1) und wenigstens einer Sekundärwicklung (4.2), einen Frequenzumformer (7) im Sekundärkreis, eine Regeleinheit (10) und einen elektronischen Schalter (3) im Primärkreis, angeschlossen an ein Dreiphasennetz (1), **gekennzeichnet dadurch, dass** der elektronische Schalter (3) mit einer Einheit zur Schnellabschaltung (11) ausgestattet ist, die zur Unterbrechung des Stromflusses durch diesen vorgesehen ist, bevor im Störungsfall das Ansprechen von Schutzeinrichtungen zur Trennung des Generators (4) vom Netz (1) oder zur Abschaltung des Frequenzumformers (7) führt und dass an die Primär- (4.1) oder Sekundärwicklungen (4.2) des Generators eine Einheit zur Schnelldemagnetisierung (12) angeschlossen ist, die im Normalbetrieb deaktiviert ist und die nach ihrer Aktivierung nach Unterbrechung des Stromflusses im Primärkreis durch den elektronischen Schalter zur Steuerung des Magnetisierungsverhaltens des Generators vorgesehen ist.

2. Generatorsystem nach Anspruch 1, **gekennzeichnet dadurch, dass** die Unterbrechung des Stromflusses in weniger als 100 Mikrosekunden, vorzugsweise in weniger als 50 Mikrosekunden vorgesehen ist.

3. Generatorsystem nach Anspruch 1 oder 2, **gekennzeichnet dadurch, dass** der Frequenzumformer (7) ein Spannungszwischenkreis-Umformer ist.

4. Generatorsystem nach einem der Ansprüche 1 - 3, **gekennzeichnet dadurch, dass** der Frequenzumformer (7) ein bidirektionaler Spannungszwischenkreis-Umformer ist, bestehend aus einem netzseitigen Frequenzumformer (7.1) und aus einem motorseitigen Frequenzumformer (7.2), die über einen Zwischenkreis (7.3) gekoppelt sind.

5. Generatorsystem nach einem der Ansprüche 1 - 4, **gekennzeichnet dadurch, dass** die Schnellabschalteinheit (11) aus Bauelementen zur Absenkung der primären Klemmenspannung des Generators unter die aktuelle Netzspannung und Bauelementen zu deren Zu- und Abschaltung besteht.

6. Generatorsystem nach einem der Ansprüche 1 - 5, **gekennzeichnet dadurch, dass** der elektronische Schalter (3) aus antiparallel geschalteten netzkommutierten Halbleiterschaltern, resp. Thyristoren aufgebaut ist und die zugehörige Schnellabschalteinheit (11) aus einer Sechspuls-Diodenbrücke (13.1), einem Halbleiterschalter und einer Kombination passiver bzw. passiver und aktiver Bauelemente zur Strombegrenzung und Löschung des Halbleiterschalters besteht.

7. Generatorsystem nach einem der Ansprüche 1 - 5, **gekennzeichnet dadurch, dass** der elektronische Schalter (3) aus antiparallel geschalteten netzkommutierten Halbleiterschaltern, resp. Thyristoren aufgebaut ist und die zugehörige Schnellabschalteinheit (11) aus einer Sechspuls-Diodenbrücke (13.1), einem strombegrenzenden Element (13.3) und einem abschaltbaren zwangskommutierten Halbleiterschalter, resp. Thyristor (GTO, GCT) (13.2) besteht.

8. Generatorsystem nach einem der Ansprüche 1 - 7, **gekennzeichnet dadurch, dass** der elektronische Schalter (3) aus netzkommutierten Thyristoren und dazu antiparallel geschalteten zwangskommutierten abschaltbaren Thyristoren (GTO, GCT) aufgebaut ist.

9. Generatorsystem nach einem der Ansprüche 1 - 8, **gekennzeichnet dadurch, dass** die Einheit zur Schnelldemagnetisierung (12) aus Elementen (14.3) zur Strombegrenzung, Abbau der Magnetisierungsenergie des Generators und Einstellung der Hauptfeldzeitkonstante des Generators und aus Bauelementen zu deren Zu- und Abschaltung besteht.

10. Generatorsystem nach einem der Ansprüche 1 - 9, **gekennzeichnet dadurch, dass** die Einheit zur Schnelldemagnetisierung (12) aus einer Sechspuls-Diodenbrücke (14.1), einem abschaltbaren Thyristor (GTO, GCT) (14.2) und einem strombegrenzenden Element (14.3), resp. einem ohmschen Widerstand besteht, wobei das strombegrenzende Element so ausgelegt ist, dass der Strom in den Sekundärwicklungen des Generators seinen zulässigen Maximalwert nicht überschreitet.

11. Generatorsystem nach einem der Ansprüche 1 - 7 und 9 - 10, **gekennzeichnet dadurch, dass** die Einheiten zur Schnellabschaltung (11) des elektronischen Schalters (3) und zur Schnelldemagnetisierung (12) in einer Baugruppe mit gemeinsamer Diodenbrücke (14.1) aufgebaut sind.

12. Generatorsystem nach einem der Ansprüche 1-11, **gekennzeichnet dadurch, dass** die Einheit zur Schnelldemagnetisierung (12) innerhalb des Frequenzumformers (7) realisiert ist.

13. Generatorsystem nach einem der Ansprüche 1-12, **gekennzeichnet dadurch, dass** die Detektion plötzlicher Änderungen der Netzspannung zur Aktivierung der Schnellabschalteinheit (12) durch direkte Messung und Auswertung der Netzspannung oder durch indirekte Erfassung über Detektion von Überströmen in netzseitigem Frequenzumformer (7.1), motorseitigem Frequenzumformer (7.2) oder Überspannungen im Zwischenkreis (7.3) erfolgt.

14. Generatorsystem nach einem der Ansprüche 1 - 13, **gekennzeichnet dadurch, dass** die Regeleinheit (10) des motorseitigen Frequenzumformers (7.2) je einen Regler für Betrag und Phasenlage des Hauptflusses des Generators enthält, die während der Aktivierung der Demagnetisierungseinheit (12) den Hauptfluss so einstellen, das die induzierte Statorspannung näherungsweise betrags- und phasengleich zur Netzspannung ist.

15. Generatorsystem mit doppelt gespeistem Dreiphasengenerator nach einem der Ansprüche 1-14, umfassend einen doppelt gespeisten Dreiphasengenerator (4) mit netzgekoppelter Primärwicklung, bzw. Statorwicklung (4.1) und wenigstens einer Sekundärwicklung, bzw. Rotorwicklung (4.2), einen Frequenzumformer (7) im Sekundärkreis und eine Regeleinheit (10), angeschlossen an ein Dreiphasennetz (1), **gekennzeichnet dadurch, dass** die Regeleinheit (10) für den Frequenzumformer (7) einen skalaren bzw. vektoriellen Regler (613) zur dynamischen Einprägung des Statorflusses des Generators enthält, dessen Stellgrössen auf die Sollwerte für die Komponenten des Rotorstromes (603, 604) aufgeschalten werden.

16. Verfahren zum Betrieb eines Generatorsystems nach einem der Ansprüche 1 - - 14, **gekennzeichnet dadurch, dass** nach Detektion einer plötzlichen Änderung der Netzspannung der Stromfluss im Statorkreis durch Aktivierung der Schnellabschalteinheit (11) und Sperren der Ansteuersignale des elektronischen Schalters (3) unterbrochen, danach die Schnelldemagnetisierungseinheit (12) aktiviert wird und mit Hilfe dieser der Hauptfluss im Generator so eingestellt wird, dass die induzierte Statorspannung näherungsweise betrags- und phasengleich zur aktuellen Netzspannung ist, und danach der Stromfluss zwischen Netz und Stator durch Deaktivieren der Schnelldemagnetisierung (12) und Aktivieren des elektronischen Schalters (3) wieder zugelassen wird.

17. Verfahren nach Anspruch 16, **gekennzeichnet dadurch, dass** während der Trennung des Primärkreises vom Netz (1) der netzseitige Frequenzumformer (7.1) weiterhin Strom in das Netz (1) speist und somit während der Dauer des Netzfehlers ein kontinuierlicher Stromfluss zwischen Generatorsystem und Netz aufrechterhalten wird.

18. Verfahren nach Anspruch 16 oder 17, **gekennzeichnet dadurch, dass** während eines Einbruchs der Netzspannung die Entmagnetisierung des Generators von der Regeleinheit (10) des motorseitigen Frequenzumformers (7.2) in einer Weise gesteuert wird, dass diese die maximal verfügbare dem Hauptfluss entgegengerichtete Spannung an die Sekundärwicklungen schaltet und damit die kürzest mögliche Entmagnetisierungszeit erreicht wird.

19. Verfahren zur Regelung des Statorflusses für ein Generatorsystem nach Anspruch 15, **gekennzeichnet dadurch, dass** ein Referenzwert (612) für den Statorfluss aus Netzspannung und Netzfrequenz berechnet wird, eine vektorielle Stellgrösse aus dem Referenzwert, dem aus elektrischen Generatorgrössen berechneten vektoriellen Flussistwert, Vergangenheitswerten der Stellgrösse und weiteren elektrischen Zustandsgrössen des Generators berechnet wird, die Stellgrösse auf die vektoriellen Sollwerte des Rotorstromes (603, 604) addiert wird, wobei die Wichtung der genannten Reglereingangsgrössen so erfolgt, dass, sofern während des Regelvorgangs keine Begrenzung von Zustandsgrössen des Generators auftritt, nach einer Zeit von weniger als 10 %, vorzugsweise weniger als 5% der Hauptfeldzeitkonstante des Generators der Sollwert der Hauptflussverkettung erreicht ist und alle durch die Netzspannungsänderung verursachten Transienten abgeklungen sind.

20. Verfahren nach Anspruch 19, **gekennzeichnet dadurch, dass** die weiteren elekelektrischen Zustandsgrössen Rotorströme ($i_{rd}$, $i_{rq}$), Rotorspannungen ($U_{rd}$, $U_{rq}$), Statorströme ($i_{sd}$, $i_{sq}$) und Statorspannungen sind.

**Claims**

1. Generator system with doubly-fed three-phase generator, consisting of a doubly-fed three-phase generator (4) with mains coupled primary winding (4.1) and at least one secondary winding (4.2), a frequency converter (7) in the secondary circuit, a control unit (10) and an electronic switch (3) in the primary circuit, connected to a three-phase system (1), **characterized by** the electronic switch (3) being equipped with a unit for instantaneous tripping (11), whereby this is intended to interrupt the power supply before this leads, in the event of a defect, to the safety devices for separating the generator (4) from the mains (1) or for disconnecting the frequency converter (7) being activated, and that a unit for rapid demagnetization (12) is connected to the primary (4.1) or secondary windings (4.2) of the generator, which is deactivated during normal operation and which, after it is activated by the electronic switch due to an interruption in the power supply in the primary circuit, is intended to control the magnetization behaviour of the generator.

2. Generator system according to Claim 1, **characterized by** the interruption in the power supply being intended to be in less than 100 microseconds, preferably in less than 50 microseconds.

3. Generator system according to Claim 1 or 2, **characterized by** the frequency converter (7) being a voltage link transformer.

4. Generator system according to one of the Claims 1 to 3 , **characterized by** the frequency converter (7) being a bidirectional voltage link transformer, consisting of a line side frequency converter (7.1) and a motor side frequency converter (7.2), which are coupled via an intermediate circuit (7.3).

5. Generator system according to one of the Claims 1 to 4, **characterized by** the instantaneous tripping unit (11) consisting of components for lowering the primary terminal voltage of the generator below the actual current mains voltage and components for their connection and disconnection.

6. Generator system according to one of the Claims 1 to 5, **characterized by** the electronic switch (3) consisting of inverse parallel connected line commutated semiconductor switches or thyristors respectively, and the associated instantaneous tripping unit (11) consisting of a six-pulse diode bridge (13.1), a semiconductor switch and a combination of passive or passive and active components for current limitation and resetting the semiconductor switch.

7. Generator system according to one of the Claims 1 to 5, **characterized by** the electronic switch (3) consisting of inverse parallel connected line commutated semiconductor switches or thyristors respectively, and the associated instantaneous tripping unit (11) consisting of a six-pulse diode bridge (13.1), a current limiting element (13.3) and an interruptible self-commutating semiconductor switch or thyristor (GTO, GCT) (13.2), respectively.

8. Generator system according to one of the Claims 1 to 7, **characterized by** the electronic switch (3) consisting of line commutated thyristors and also inverse parallel connected self-commutating, interruptible thyristors (GTO, GCT).

9. Generator system according to one of the Claims 1 to 8, **characterized by** the unit for rapid demagnetization (12) consisting of elements (14.3) for limiting current, dissipating the magnetization energy of the generator and adjusting the main field time constant of the generator and of components for its connection and disconnection.

10. Generator system according to one of the Claims 1 to 9, **characterized by** the unit for rapid demagnetization (12) consisting of a six-pulse diode bridge (14.1), an interruptible thyristor (GTO, GCT) (14.2) and a current limiting element (14.3) respectively an ohmic resistance, whereby the current limiting element is rated so that the current in the secondary windings of the generator does not exceed its permitted maximum value.

11. Generator system according to one of the Claims 1 to 7 and 9 to 10, **characterized by** the units for instantaneous tripping (11) of the electronic switch (3) and for rapid demagnetization (12) are being mounted on an assembly with a mutual diode bridge (14.1).

12. Generator system according to one of the Claims 1 to 11, **characterized by** the unit for rapid demagnetization (12) being implemented within the frequency converter (7).

13. Generator system according to one of the Claims 1 to 12, **characterized by** the detection of sudden changes in the mains voltage causing activation of the instantaneous tripping unit (11) through direct measurement and evaluation of the mains voltage or through indirect acquisition by detecting excess currents in the line side frequency converter (7.1), motor side frequency converter (7.2) or excess currents in the intermediate circuit (7.3).

14. Generator system according to one of the Claims 1 to 13, **characterized by** the control unit (10) of the motor side frequency converter (7.2) each containing a controller for the magnitude and phase angle of the working flux of the generator, which adjusts the working flux during activation of the demagnetization unit (12) so that the induced stator voltage is approximately equal to the magnitude and phase angle of the mains voltage.

15. Generator system with doubly-fed three-phase generator according to one of the Claims 1 to 14, consisting of a doubly-fed three-phase generator (4) with mains coupled primary winding or stator winding (4.1) respectively, and at least one secondary winding or rotor winding (4.2), a frequency converter (7) in the secondary circuit and a control unit (10) connected to a three-phase system (1), **characterized by** the control unit (10) for the frequency converter (7) having a scalar or vectorial controller (613) for dynamic impression of the stator flux of the generator, whose manipulated variable is applied to the defaults for the components of the rotor current (603, 604).

16. Method for operating a generator system according to one of the Claims 1 to 14, **characterized by** detection of a sudden change in the mains voltage resulting in the flow of current in the stator circuit being interrupted by activating the instantaneous tripping unit (11) and blocking the triggering signals of the electronic switch (3), after which the rapid demagnetization unit (12) is activated and with its aid the working flux in the generator is set so that the induced stator current is approximately equal in magnitude and phase to the current mains voltage and thereafter the flow of current between the mains and the stator is again permitted by deactivating the rapid demagnetization (12) and activating the electronic switch (3).

**17.** Method according to Claim 16, **characterized by** the mains side frequency converter (7.1) continuing to supply current to the mains (1) during separation of the primary circuit from the mains (1), and thus maintains a continuous flow of current between the generator system and the mains during the period of the mains fault.

**18.** Method according to Claim 16 or 17, **characterized by** the demagnetization of the generator being controlled by the control unit (10) of the motor side frequency converter (7.2) during a drop in the mains voltage in a manner in which this connects the maximum available reverse voltage in the working flux to the secondary windings and thus achieves the shortest possible demagnetization time.

**19.** Method to control the stator flux for a generator system according to Claim 15, **characterized by** a reference value (612) being computed for the stator flux from the mains voltage and mains frequency, a vectorial variable being computed from the reference value, the actual vectorial flux value being computed from the electrical generator dimensions, empirical data regarding the manipulated variable and other electrical condition data of the generator being computed, the manipulated variable is added to the rated vectorial variables of the rotor current (603, 604), whereby weighting of the stated initial controller data is carried out so that, insofar as no limitation to the condition data of the generator occurs during the control process, after a time of less than 10%, preferably less than 5% of the open circuit field time constant of the generator is achieved and the rated variable of the working flux linkage and all transients caused by the change in the mains voltage have died down.

**20.** Method according to Claim 19, **characterized by** the additional electric reference values being rotor currents ($I_{rd}$, $I_{rq}$), rotor voltages ($U_{rd}$, $U_{rq}$), stator currents ($I_{sd}$, $I_{sq}$) and stator voltages.

## Revendications

**1.** Système de générateur avec un générateur trois phases à double alimentation, comprenant un générateur trois phases à double alimentation (4) avec un bobinage primaire couplé au réseau (4.1) et au moins un bobinage secondaire (4.2), un convertisseur de fréquence (7) dans le circuit secondaire, une unité de régulation (10) et un commutateur électronique (3) dans le circuit primaire, connecté à un réseau triphasé (1), **caractérisé en ce que** le commutateur électronique (3) est équipé d'une unité servant à la déconnexion ou coupure rapide (11), prévue pour interrompre le courant, avant que n'interviennent, en cas de dérangement, les dispositifs de protection pour couper le générateur (4) du réseau (1) ou stopper le convertisseur de fréquence (7) et qu'une unité de démagnétisation rapide (12) est connectée aux bobinages primaires (4.1) ou secondaires (4.2) du générateur, unité désactivée lors d'un fonctionnement normal, mais qui après son activation est prévue pour contrôler le comportement de magnétisation du générateur, suite à l'interruption du courant dans le circuit primaire par le commutateur électronique,

**2.** Système de générateur selon la revendication 1, **caractérisé en ce que** l'interruption du courant est prévue en moins de 100 microsecondes, de préférence en moins de 50 microsecondes.

**3.** Système de générateur selon la revendication 1 ou 2, **caractérisé en ce que** le convertisseur de fréquence (7) est un convertisseur de tension à circuit intermédiaire.

**4.** Système de générateur selon l'une des revendications 1-3, **caractérisé en ce que** le convertisseur de fréquence (7) est un convertisseur de tension à circuit intermédiaire bidirectionnel comprenant côté réseau un convertisseur de fréquence (7.1) et côté moteur un convertisseur de fréquence (7.2), couplés à l'aide d'un circuit intermédiaire (7.3).

**5.** Système de générateur selon l'une des revendications 1- 4, **caractérisé en ce que** l'unité de coupure rapide (11) comprend des éléments de construction servant à baisser la tension primaire des bornes du générateur en dessous de la tension actuelle du réseau et d'éléments de construction servant à l'enclencher ou à la déclencher.

**6.** Système de générateur selon l'une des revendications 1- 5, **caractérisé en ce que** le commutateur électronique (3) est constitué de commutateurs à semiconducteurs ou de thyristors branchés de manière antiparallèle à commutation de réseau et que l'unité de coupure rapide (11) qui en fait partie est composée d'un pont de diodes à six pulsations (13.1), d'un commutateur à semiconducteurs et d'une combinaison d'éléments de construction passifs ou passifs et actifs servant à limiter le courant et couper le commutateur à semiconducteurs.

7. Système de générateur selon l'une des revendications 1- 5, **caractérisé en ce que** le commutateur électronique (3) est constitué de commutateurs à semiconducteurs à commutation de réseau, branchés de manière antiparallèle ou de thyristors et que l'unité de coupure rapide (11) qui en fait partie est composée d'un pont de diodes à six pulsations (13.1), d'un élément limiteur de courant (13.3) et d'un commutateur à semiconducteurs à commutation forcée ou de thyristors (GTO, GCT) (13.2) pouvant être déconnectés.

8. Système de générateur selon l'une des revendications 1-7, **caractérisé en ce que** le commutateur, électronique (3) comprend des thyristors à commutation de réseau avec en plus des thyristors à commutation forcée, branchés de manière antiparallèle (GTO, GCT) et pouvant être déconnectés.

9. Système de générateur selon l'une des revendications 1 - 8, **caractérisé en ce que** l'unité de démagnétisation rapide (12) comprend des éléments (14.3) pour limiter le courant, éliminer l'énergie de magnétisation du générateur et régler la constante de temps du champ principal du générateur et des éléments de construction servant à l'enclencher ou à la déclencher.

10. Système de générateur selon l'une des revendications 1- 9, **caractérisé en ce que** l'unité de démagnétisation rapide (12) comprend un pont de diodes à six pulsations (14.1), un thyristor pouvant être déconnecté (GTO, GCT) (14.2) et un élément limiteur de courant (14.3) ou une résistance ohmique, et dont l'élément limiteur de courant est conçu de telle façon que le courant dans les bobinages secondaires du générateur ne puisse pas dépasser une certaine valeur maximale admissible.

11. Système de générateur selon l'une des revendications 1 - 7 et 9-10, **caractérisé en ce que** les unités de coupure rapide (11) du commutateur électronique (3) et de démagnétisation rapide (12) font partie d'un groupe de construction ayant un pont de diodes (14. 1) commun.

12. Système de générateur selon l'une des revendications 1- 11, **caractérisé en ce que** l'unité de démagnétisation rapide (12) est réalisée à l'intérieur du convertisseur de fréquence (7).

13. Système de générateur selon l'une des revendications 1- 12, **caractérisé en ce que** la détection de variations de tension subites s'effectue par l'activation de l'unité de coupure rapide (12) grâce à la mesure directe et l'évaluation de la tension ou par la saisie indirecte d'une surintensité détectée dans le convertisseur de fréquence côté réseau (7.1), dans le convertisseur de fréquence côté moteur (7.2) ou surintensités dans le circuit intermédiaire (7.3).

14. Système de générateur selon l'une des revendications 1-13, **caractérisé en ce que** l'unité de régulation (10) du convertisseur de fréquence côté moteur (7.2) comprend à chaque fois un régulateur pour l'ampleur et l'état de la phase du flux principal du générateur, en réglant pendant l'activation de l'unité de démagnétisation (12) le flux principal de telle manière que la tension induite du stator s'approche le plus possible de l'ampleur et de la phase de la tension du réseau.

15. Système de générateur avec un générateur trois phases à double alimentation selon l'une des revendications 1-14, comprenant un générateur trois phases à double alimentation (4) avec un bobinage primaire couplé au réseau (4.1) et au moins un bobinage secondaire (4.2), un convertisseur de fréquence (7) dans le circuit secondaire, une unité de régulation (10) et un commutateur électronique (3) dans le circuit primaire, connecté à un réseau triphasé (1), **caractérisé en ce que** l'unité de régulation (10) pour le convertisseur de fréquence (7) contient un régulateur scalaire ou vectoriel (613) servant à l'impression dynamique du flux du stator du générateur et dont les valeurs de réglage seront élevées aux valeurs obligatoires pour les composants du flux du rotor (603, 604).

16. Procédé d'exploitation d'un système de générateurs selon l'une des revendications 1-14, **caractérisé en ce que**, tout de suite après la détection d'une variation brusque de la tension du réseau, le flux dans le circuit du stator soit interrompu grâce à l'activation de l'unité de coupure rapide (11) et par le blocage des signaux de démarrage du commutateur électronique (3) et qu'ensuite l'unité de démagnétisation rapide soit activée (12) et que, avec son aide, le flux principal soit réglé de telle façon dans le générateur que la tension induite du stator s'approché le plus possible dé l'ampleur et de la phase de la tension du réseau, et qu'ensuite le flux du courant entre le réseau et le stator soit de nouveau admis, suite à la désactivation de la démagnétisation rapide (12) et à l'activation du commutateur électronique (3).

**17.** Procédé selon la revendication 16 **caractérisé en ce que**, pendant la séparation entre le circuit primaire et le réseau (1), le convertisseur de fréquence côté réseau (7.1) continue à alimenter le réseau (1) permettant ainsi de maintenir pendant toute la durée du défaut survenu sur le réseau un flux continu de courant entre le système de générateur et le réseau.

**18.** Procédé selon la revendication 16 ou 17 **caractérisé en ce que**, lors d'un effondrement de la tension, la démagnétisation du générateur soit piloté par l'unité de régulation (10) du convertisseur de fréquence côté moteur (7.2) de façon à dévier vers le bobinage secondaire la tension maximale disponible, opposée au flux principal et obtenir ainsi un temps de démagnétisation le plus court possible.

**19.** Procédé pour réguler le flux du stator pour un système de générateurs selon la revendication 15, **caractérisé en ce qu'**une valeur de référence (612) est calculée pour le flux du stator à partir de la tension et la fréquence du réseau, une grandeur de réglage vectorielle à partir de la valeur de référence, la valeur réelle du flux calculée à partir des valeurs électriques du générateur, des valeurs du passé de la grandeur de réglage et d'autres variables d'état électriques du générateur, la grandeur de réglage étant additionnée pour atteindre les valeurs vectorielles requises pour le flux du rotor (603, 604), et que la pondération des valeurs d'entrée de régulation susnommées s'effectue de manière à ce que, pour autant que durant le procédé de réglage il se ne produise pas une limitation des variables d'état du générateur, après un laps de temps de moins de 10 %, de préférence de moins de 5% de la constante de temps du champ principal du générateur, la valeur requise pour le chaînage du flux principal soit atteinte et que tous les effets transitoires causés par la variation de tension aient disparus.

**20.** Procédé selon la revendication 19, **caractérisé en ce que** les autres valeurs électriques du régime sont des flux de rotor (ird, irq), des 'tensions de rotor (Urd, Urq), des flux de stator (isd, ,isq) et des tensions de stator.

EP 1 561 275 B1

Fig. 1a

4.1    4.2    4.3

4

Fig. 1b

16

Fig. 2

Fig. 4

Fig. 3

Fig. 5a

Fig. 5b

Fig. 5c

Fig. 6a

Fig. 6b

Fig. 6c

Fig. 6d

Fig. 6e

Fig. 7

dq    line voltage oriented reference frame
ab    *rotor fixed reference frame*
αβ    stator fixed reference frame

EP 1 561 275 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9907996 A
- US 5083039 A
- EP 0884833 A

- WO 0191279 A
- US 6137187 A

**In der Beschreibung aufgeführte Nicht-Patentliteratur**

- **V. QUASCHNING.** Regenerative Energiesysteme. Carl Hansen Verlag, 1998, 217-226
- **W. HOFMANN ; A. STOEV ; A. DITTRICH ; A. THIEME.** Design and control of a wind power station with doubly-fed induction generator. *EPE,* 1997, 2.723-2.728

- **A. DITTRICH ; N.P. QUANG ; A. THIEME.** Doubly-fed induction machine as generator: Control algorithms with decoupling of torque and power factor. *Electrical Engineering,* Oktober 1997, vol. 80 (5), 325-336